(19) Europäisches Patentamt
European Patent Office
Office européen des brevets

(11) EP 4 439 447 A1

(12) EUROPEAN PATENT APPLICATION
published in accordance with Art. 153(4) EPC

(43) Date of publication:
02.10.2024 Bulletin 2024/40

(51) International Patent Classification (IPC):
G06T 7/00 (2017.01)

(21) Application number: 22894914.5

(52) Cooperative Patent Classification (CPC):
G06F 17/16; G06T 7/00; G06T 7/70

(22) Date of filing: 17.11.2022

(86) International application number:
PCT/CN2022/132629

(87) International publication number:
WO 2023/088383 (25.05.2023 Gazette 2023/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.11.2021 CN 202111387413

(71) Applicant: ZTE Corporation
Shenzhen, Guangdong 518057 (CN)

(72) Inventor: WANG, Hui
Shenzhen, Guangdong 518057 (CN)

(74) Representative: Cristinelli, Luca
Jacobacci & Partners S.p.A.
Corso Emilia, 8
10152 Torino (IT)

(54) METHOD AND APPARATUS FOR REPOSITIONING TARGET OBJECT, STORAGE MEDIUM AND ELECTRONIC APPARATUS

(57) The disclosure provides a method and apparatus for relocating a target object, a storage medium, and an electronic apparatus. The method includes: acquiring a first camera pose matrix and a first image during relocating of the target object in a virtual space; calculating a second camera pose matrix according to the first camera pose matrix and the first image; determining a first target pose matrix according to the second camera pose matrix; and updating second pose information of the target object in the virtual space according to the first target pose matrix, where the second pose information is pose information, acquired during last locating, of the target object in the virtual space.

Fig. 5

## Description

### Cross-Reference to Related Application

The disclosure claims the priority to Chinese Patent Application No. 202111387413.6, filed with the Chinese Patent Office on November 22, 2021 and entitled "Method and apparatus for relocating target object, storage medium, and electronic apparatus", which is incorporated in its entirety herein by reference.

### Technical Field

The disclosure relates to the field of communication, and in particular to a method and apparatus for relocating a target object, a storage medium, and an electronic apparatus.

### Background

Augmented reality is a technology that calculates a pose transformation in real time according to images acquired by a mobile terminal with the aid of computing power of a hardware device, understands a real environment and renders text, images, models, and videos at appropriate positions. It fuses a virtual space with a target object in the real environment. Accordingly, the virtual space is enriched and endowed with more information, enhancing visual effect experience and three-dimensional virtuality-and-reality interactivity. With recent rapid development of the AR technology, manufacturers throughout the world set about launching software development kits (SDKs), a type of AR development kits. These AR development kits can effectively shorten an AR application development period. With an anchor function as a basic core function of an AR application, plane detection, object location, object recognition, image recognition, face recognition, etc. are supported.

However, an anchor function of the existing AR development kit can only anchor a position of a target object in a virtual space currently acquired by the mobile terminal. For other users, the same target object is not definitely positioned in the same position in the virtual space. Since environmental textures of the real environment have an impact on a constructed virtual environment, the object locating stability of the AR development kit will fluctuate greatly. In consequence, a position of the target object in the virtual space drifts, resulting in undesirable AR experience.

As for the problem that the AR technology has low locating accuracy of the target object in the virtual space, no effective solution has been provided yet.

### Summary

A method and apparatus for relocating a target object, a storage medium, and an electronic apparatus are provided in examples of the disclosure, so as to at least solve low locating accuracy of a target object in a virtual space.

In an aspect, a method for relocating a target object is provided in an embodiment of the disclosure. The method includes: acquiring a first camera pose matrix and a first image during relocating of the target object in a virtual space, where the first camera pose matrix is configured to denote pose information of a camera on a mobile terminal in the virtual space during last locating of the target object in the virtual space, the first image is an image shot by the camera in a real space after the last locating, and the target object is positioned in the real space; calculating a second camera pose matrix according to the first camera pose matrix and the first image, where the second camera pose matrix is configured to denote pose information corresponding to the camera in a point cloud space when the camera shoots the first image; determining a first target pose matrix according to the second camera pose matrix, where the first target pose matrix is configured to denote first pose information of the target object in the point cloud space; and updating second pose information of the target object in the virtual space according to the first target pose matrix, where the second pose information is pose information, acquired during the last locating, of the target object in the virtual space.

In another aspect, an apparatus for relocating a target object is further provided in an embodiment of the disclosure. The apparatus includes: a transmission module configured to acquire a first camera pose matrix and a first image during relocating of the target object in a virtual space, where the first camera pose matrix is configured to denote pose information of a camera on a mobile terminal in the virtual space during last locating of the target object in the virtual space, the first image is an image shot by the camera in a real space after the last locating, and the target object is positioned in the real space; an acquisition module configured to calculate a second camera pose matrix according to the first camera pose matrix and the first image, where the second camera pose matrix is configured to denote pose information corresponding to the camera in a point cloud space when the camera shoots the first image; a determination module configured to determine a first target pose matrix according to the second camera pose matrix, where the first target pose matrix is configured to denote first pose information of the target object in the point cloud space; and an update module configured to update second pose information of the target object in the virtual space according to the first target pose matrix, where the second pose information is pose information, acquired during the last locating, of the target object in the virtual space.

In yet another aspect, a computer-readable storage medium is further provided in an embodiment of the disclosure. The computer-readable storage medium stores a computer program, where the computer program is configured to execute the method for relocating a target object when run.

In still another aspect, an electronic apparatus is further provided in an embodiment of the disclosure. The electronic apparatus includes a memory, a processor, and a computer program stored on the memory and runnable on the processor, where the processor executes the method for relocating a target object through the computer program.

According to the disclosure, when the target object is relocated in the virtual space, the second camera pose matrix is acquired according to the first camera pose matrix and the first image acquired; the first target pose matrix is determined according to the second camera pose matrix; and the second pose information of the target object in the virtual space is updated according to the first target pose matrix. Therefore, the technical problem of the low locating accuracy of the target object in the virtual space in the related art is solved, and the locating accuracy is improved.

## Brief Description of the Drawings

The accompanying drawings described herein are used for providing further understanding of the disclosure as a constituent part of the disclosure. Illustrative examples of the disclosure and their descriptions serve to explain the disclosure, instead of limiting the disclosure improperly. In the accompanying drawings:

Fig. 1 is a schematic structural block diagram of a computer terminal of a method for relocating a target object according to an embodiment of the disclosure;

Fig. 2 is a schematic diagram of a process of relocating a target object according to an embodiment of the disclosure;

Fig. 3 is a schematic diagram of a camera in a point cloud space according to an embodiment of the disclosure;

Fig. 4 is a schematic diagram of relocating a target object in a virtual space according to an embodiment of the disclosure;

Fig. 5 is a schematic flowchart of a method for relocating a target object according to an embodiment of the disclosure;

Fig. 6 is a schematic flowchart of a method for relocating a target object according to another example of the disclosure; and

Fig. 7 is a schematic structural block diagram of an apparatus for relocating a target object according to an embodiment of the disclosure.

## Detailed Description of the Embodiments

In order to enable those skilled in the art to better understand solutions of the disclosure, the technical solutions in examples of the disclosure will be clearly and comprehensively described below in conjunction with the accompanying drawings in the embodiments of the disclosure. Apparently, the examples described are merely some examples rather than all examples of the disclosure. Based on the examples of the disclosure, all another embodiment derived by those of ordinary skill in the art without creative efforts fall within the scope of protection of the disclosure.

It should be noted that the terms "first", "second", etc. in the description and claims of the disclosure and the above accompanying drawings are used to distinguish between similar objects, instead of necessarily describing a specific sequence or a successive order. It should be understood that data used in such a way can be interchanged where appropriate, so that the examples of the disclosure described herein may be implemented in other orders than those illustrated or described herein. In addition, the terms "comprise", "include", "have", and their any variations are intended to cover non-exclusive inclusions. For example, processes, methods, systems, products, or devices encompassing a series of steps or units can include other steps or units that are not explicitly listed or are inherent to these processes, methods, products, or devices, without being limited to those steps or units explicitly listed.

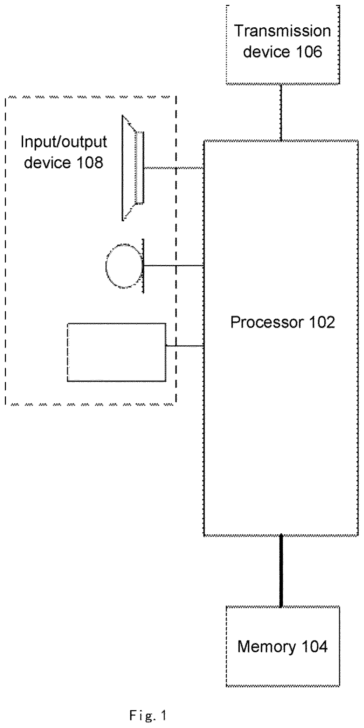

A method example according to the example of the disclosure may be executed in a computer terminal, etc. With running on the computer terminal as an embodiment, Fig. 1 is a schematic structural block diagram of a computer terminal of a method for relocating a target object according to an embodiment of the disclosure. As shown in Fig. 1, the computer terminal may include one or more processors 102 (only one processor is shown in Fig. 1) and a memory 104 configured to store data, where the processor 102 may include, but is not limited to, a microprocessor unit (MPU) or a programmable logic device (PLD). In an illustrative example, the computer terminal may further include a transmission device 106 configured for a communication function and an input/output device 108. Those of ordinary skill in the art can understand that the structure shown in Fig. 1 is merely illustrative and is not intended to limit the structure of the computer terminal. For example, the computer terminal may further include more or fewer components than those shown in Fig. 1 or have different configurations with equivalent functions or more functions compared to those shown in Fig. 1.

The memory 104 may be configured to store a computer program, for example, a software program and a module of application software such as a computer program corresponding to the method for relocating a target object in the embodiment of the disclosure. The processor 102 executes various function applications and data processing by running the computer program stored in the memory 104, so as to implement the method. The memory 104 may include a high-speed random access memory, and may further include a non-volatile memory, such as one or more magnetic storage apparatuses, flash memories, or other non-volatile solid-state memories. In some instances, the memory 104 may further include memories remotely configured relative to the processor 102. These remote memories may be connected to the computer terminal through a network. The instances of the network include, but are not limited to, the Internet, an intranet, a local area network, a mobile communication network, and their combinations.

The transmission device 106 is configured to receive or transmit data via one network. The specific instances of the network may include a wireless network provided by a communication provider of the computer terminal. In an instance, the transmission device 106 includes a network interface controller (NIC), which may be connected to other network devices through a base station to communicate with the Internet. In an instance, the transmission device 106 may be a radio frequency (RF) module, which is configured to communicate with the Internet wirelessly.

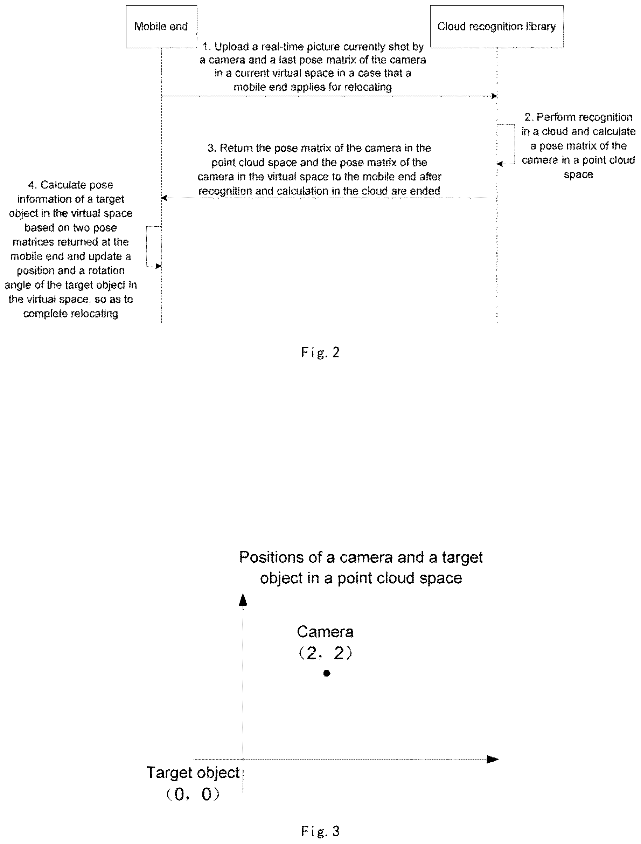

Fig. 2 is a schematic diagram of a process of relocating a target object according to an embodiment of the disclosure. As shown in Fig. 2, the process of relocating a target object is specifically provided as follows:

At step 1, a real-time picture currently shot by a camera and a last pose matrix of the camera in a current virtual space are uploaded to a cloud recognition library in a case that a mobile end (equivalent to the mobile terminal) applies for relocating.

It should be noted that the pose matrix of the camera in the current virtual space may be interpreted as a pose matrix (equivalent to the first camera pose matrix) of the camera in the virtual space during last locating.

At step 2, the target object is recognized in a cloud, and a pose matrix (i.e., a second camera pose matrix) of the camera in a point cloud space is calculated in combination with a database (i.e., the cloud recognition library in Fig. 2, which is equivalent to an image data database for storing the first image) in the cloud.

It should be noted that the pose matrix (i.e., a first target pose matrix) of the target object in the point cloud space may be determined based on the second camera pose matrix.

At step 3, the pose matrix (equivalent to the second camera pose matrix), calculated in the cloud, of the camera in the point cloud space and the pose matrix (equivalent to the first camera pose matrix) of the camera in the virtual space are returned to the mobile end after a process of recognizing the target object and a process of calculating the second camera pose matrix are completed.

At step 4, a pose matrix (equivalent to the second target pose matrix) of the target object in the virtual space is calculated at the mobile end based on the first camera pose matrix and the first target pose matrix returned, and pose information of the target object in the virtual space is updated according to the second target pose matrix.

In an embodiment, the process of calculating the second target pose matrix in step 4 may be described in conjunction with examples in Figs. 3-4. As shown in Fig. 3, a schematic diagram of positions of the camera and the target object in the point cloud space is provided. In Fig. 3, a two-dimensional coordinate system of the camera and the target object is constructed with the position of the target object as an origin. Coordinates of the target object are (0,0), and coordinates of the camera are (2,2).

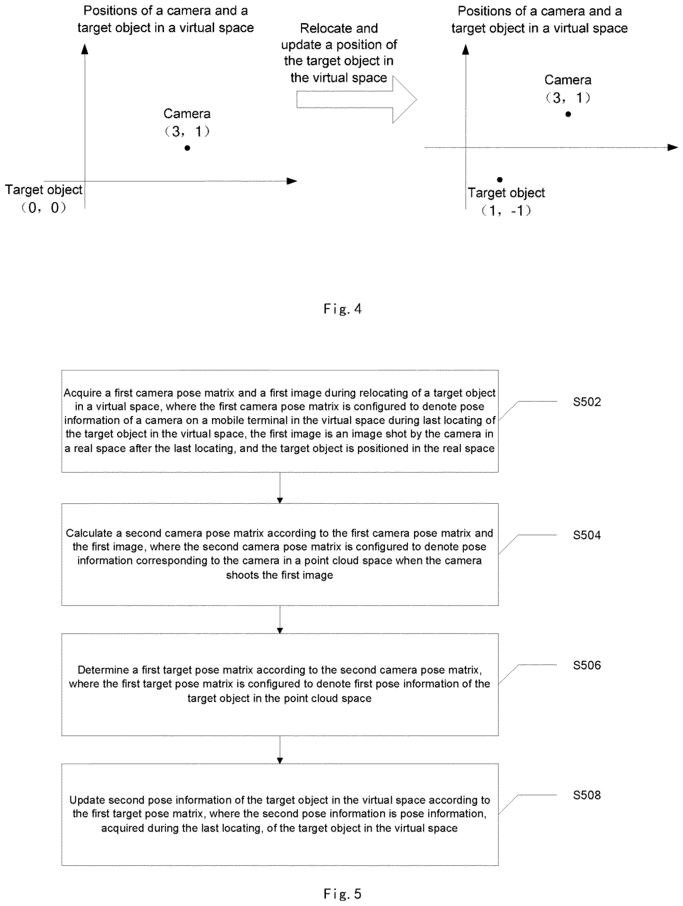

As shown in Fig. 4, a schematic diagram of updating a position of the target object in the virtual space is provided. In combination with the positions of the camera and the target object in the point cloud space in Fig. 3, positions of the camera and the target object in the virtual space during the last locating are updated to positions of the camera and the target object during relocating. The camera is unchanged in position, with coordinates of (3,1), and the coordinates of the target object are updated from (0,0) to (1,-1).

In an embodiment, a process of updating the pose information of the target object in the virtual space according to the second target pose matrix may be described in conjunction with codes as follows. That is, firstly, a pose matrix of the camera in the point cloud space during relocating is calculated through the real-time image and the pose matrix of the camera in the virtual space during the last locating, and a pose matrix of the target object in the point cloud space during relocating is acquired according to the pose matrix of the camera in the point cloud space during relocating. Then, spatial operation is performed according to the pose matrix of the target object in the point cloud space during relocating and the matrix of the camera in the virtual space during the last locating, so as to obtain pose information of the target object in the virtual space during relocating. Therefore, the target object is relocated in the virtual space. Codes configured to understand the process of updating the pose information of the target object in the virtual space according to the second target pose matrix are as follows:

```
/**
 matrix-the pose matrix of the camera in the point cloud space
 origin-the pose matrix of the camera in the virtual space
 /*
 public void UpdatePos(Matrix4x4 matrix, Matrix4x4origin)
 {
 Matrix4x4inverse=matrix.inverse;//an inverse matrix
 Vector3cameraPosOnPointCloud=ExtractPosition(matrix);//a position, acquired from the pose
matrix, of the camera in the point cloud space
 Vector3cameraTotarget=Vector3. Normaliaze(Vector3.zero-cameraPosOnPointCloud);
 //a direction in which the camera points at the
target object in the point cloud space. Since the
 target object is placed at the origin by default,
the coordinates of the camera are subtracted from the
 coordinates of the origin
 Vector3targetForwardOnLocal=inverse*Vector3.forward;//a forward direction of the target
 object in the virtual space
 Vector3targetUpOnLocal=inverse*Vector3.up;an up
direction of the target object in the virtual
 space
 floatd istance= Vector3. Distance(Vector3. zero, cameraPosOn Poi ntCloud);
 //a distance from the camera to the target object
in the point cloud space, and since the target
 object is placed at the origin by default, the
coordinates of the camera are subtracted from the
 coordinates of the origin
 Vector3cameraTotargetOnLocal=inverse*cameraTotarget;//a direction in which the camera
 points at the target object in the virtual space
 Vector3localPosition=cameraTotargetOnLocal*distance;
 //a position of the target object in the virtual space
 Vector4pos4=newVector4(localPosition.x,localPosition.y,localPosition.z,1);
 ContentRoot.position=origin*pos4;//update the position of the target object
 ContentRoot.rotation=Quaternion.LookRotation(origin*targetForwardOnLocal,origin*targetUpO
nLocal);//update a rotation angle of the target object
 }.
```

Fig. 5 is a schematic flowchart of a method for relocating a target object according to an embodiment of the disclosure. As shown in Fig. 5, the method includes:

At S502, a first camera pose matrix and a first image are acquired during relocating of the target object in a virtual space, where the first camera pose matrix is configured to denote pose information of a camera on a mobile terminal in the virtual space during last locating of the target object in the virtual space, the first image is an image shot by the camera in a real space after the last locating, and the target object is positioned in the real space.

It should be noted that the mobile terminal may be interpreted as a mobile terminal device, including, but not limited to, a mobile phone, a tablet computer, a wearable device, a smart watch, etc. The mobile terminal may be set to work passively or actively. When working passively, the mobile terminal may be used by a person or a robot. The mobile terminal is provided with the camera for shooting.

It should be noted that the pose information of the camera may be interpreted as a collective name of a position and a pose of the camera, describing a transformation relation between a first coordinate system of a first space and a second coordinate system of a second space. The pose matrix of the camera and first coordinates of the camera may be transformed mutually through a transformation matrix in a case that the first coordinates of the camera in the first coordinate system are known.

At S504, a second camera pose matrix is calculated according to the first camera pose matrix and the first image, where the second camera pose matrix is configured to denote pose information corresponding to the camera in a point cloud space when the camera shoots the first image.

At S506, a first target pose matrix is determined according to the second camera pose matrix, where the first target pose matrix is configured to denote first pose information of the target object in the point cloud space.

At S508, second pose information of the target object in the virtual space is updated according to the first target pose matrix, where the second pose information is pose information, acquired during the last locating, of the target object in the virtual space.

In the disclosure, the first camera pose matrix and the first image are acquired during relocating of the target object in the virtual space, where the first camera pose matrix is configured to denote the pose information of the camera on the mobile terminal in the virtual space during the last locating of the target object in the virtual space, the first image is the image shot by the camera in the real space after the last locating, and the target object is positioned in the real space. The second camera pose matrix is calculated according to the first camera pose matrix and the first image, where the second camera pose matrix is configured to denote the pose information corresponding to the camera in the point cloud space when the camera shoots the first image. The first target pose matrix is determined according to the second camera pose matrix, where the first target pose matrix is configured to denote the first pose information of the target object in the point cloud space. The second pose information of the target object in the virtual space is updated according to the first target pose matrix, where the second pose information is the pose information, acquired during the last locating, of the target object in the virtual space. Therefore, the technical problem of low locating accuracy of the target object in the virtual space in an augmented reality (AR) technology is solved, and the locating accuracy of the target object in the virtual space is improved.

It should be noted that a relocation process is essentially to unify a relative relation between the camera and contents in two three-dimensional spaces. Therefore, in the embodiment, firstly, two three-dimensional spaces, i.e., the point cloud space and the virtual space are constructed. The point cloud space may be interpreted as a three-dimensional space constructed through a point cloud technology. Pose information of the camera and the contents may be accurately acquired in the point cloud space in combination with a recognition algorithm. The virtual space may be interpreted as a three-dimensional space constructed based on spatial coordinate axes. Since the position of the target object in the virtual space is likely to shift, it is generally require to relocate the target object in the virtual space.

It should be noted that reference may be made to a description process of the pose information of the camera for the description of the pose information of the target object, which will not be repeated herein.

In an embodiment, if being set to $P_w$, a first coordinate $P_w$ of point P may be transformed to a second coordinate of point P in the coordinate system of the second space through the pose matrix of the camera. The second coordinate $P_c$ is expressed as follows:

$$P_c = T_{cw} \times P_w \qquad (1);$$

and alternatively,
point P is transformed from the second coordinate system to the first coordinate system:

$$P_w = T_{wc} \times P_c = T_{cw}^{-1} \times P_c \qquad (2).$$

$T_{cw}$ denotes a transformation matrix for transforming point P from the first coordinate system to the second coordinate system, and $T_{wc}$ denotes a transformation matrix for transforming point P from the second coordinate system to the first coordinate system.

Based on the above example, the target object may be transformed between the point cloud space and the virtual space in a case that the first space denotes the point cloud space, and the second space denotes the virtual space.

In an illustrative example, for better understanding of S508 that second pose information of the target object in the virtual space is updated according to the first target pose matrix, a technical solution is specifically provided as follows: the second pose information of the target object in the virtual space is updated to third pose information according to the first target pose matrix as follows: a second target pose matrix is determined according to the first camera pose matrix and the first target pose matrix, where the second target pose matrix is configured to denote the third pose information of the target object in the virtual space after the last locating; and the second pose information is updated to the third pose information in a case that an error value between the second pose information and the third pose information is greater than a first preset value. Through the technical solution in the embodiment, the pose information of the target object in the virtual space may be updated in a case that the pose information of the target object in the virtual space is changed, so that the position of the target object is updated. Accordingly, the locating accuracy of the target object is further improved.

It should be noted that the error value may be an angle error value or a position error value in terms of type, which will not be limited in the disclosure.

It should be noted that the first preset value may be set corresponding to the type of the error value manually or determined by historical data.

In an embodiment, the first preset value relative to the angle error value may be a degree within a range [0,1], the first preset value relative to the position error value may be denoted by coordinate values, and the range of the first preset value, i.e., an offset range of the coordinates, is [-1,1].

In an illustrative example, a technical solution is further specifically provided as follows: the third pose information is compensated with the error value; and alternatively, a compensation parameter corresponding to the error value is acquired, and the third pose information is compensated with a quotient value obtained by dividing the error value by the compensation parameter. Through the technical solution in the embodiment, an error of the pose information updated of the target object in the virtual space can be reduced, and the confidence of the pose information of the target object in the virtual space can be improved.

It should be noted that the compensation parameter may be interpreted as a compensation number for the error value and preset according to the error value, and has a positive correlation relation with the error value. For example, the larger the error value is, the larger the compensation parameter corresponding to the error value is.

In an illustrative example, the third pose information may be compensated with the error value through a plurality technical solutions. In the embodiment, a technical solution is provided as follows: a coordinate compensation value corresponding to the error value is determined; and spatial coordinates in the third pose information are adjusted according to the coordinate compensation value. Through the technical solution in the embodiment, an error of the spatial coordinates updated of the target object in the virtual space can be reduced, the confidence of the pose information of the target object in the virtual space can be improved, and the locating accuracy of the target object in the virtual space can be improved.

In an illustrative example, a technical solution in which the third pose information is compensated with the error value is further specifically provided as follows: an angle compensation value corresponding to the error value is determined, where the angle compensation value is configured to denote an angle difference between a spatial angle of the camera during the last locating and a spatial angle after the last locating; and a spatial angle in the third pose information is adjusted according to the angle compensation value. Through the technical solution in the embodiment, an error of the spatial angle updated of the target object in the virtual space can be reduced, the confidence of the pose information of the target object in the virtual space can be improved, and the locating accuracy of the target object in the virtual space can be improved.

In an embodiment, in a case that the error value is a type of angle error value, if the angle error value is set to 0.5 degree, a corresponding compensation number is set to 5, and if the angle error value is set to 1 degree, the corresponding compensation number is set to 10.

In an embodiment, a process of compensating the third pose information with the quotient value obtained by dividing the error value by the compensation parameter may be interpreted as a process of compensation with the angle error value and the compensation parameter corresponding to the angle error value: in a case that the angle error value is set to 0.5 degree and a compensation number corresponding to the angle error value is set to 5, the third pose information may be compensated with a quotient value obtained by dividing 0.5 degree by 5, i.e., 0.1 degree. In some cases, the third pose information may be compensated 5 times, with a compensation value of 0.1 degree each time.

It should be noted that the coordinate compensation value and the angle compensation value have a positive correlation relation with the error value separately. Therefore, processes of adjusting the third pose information according to the coordinate compensation value and the angle compensation value is similar to the process of compensation with the angle error value and the compensation parameter corresponding to the angle error value. In another embodiment, reference may be made to the process of compensation with the angle error value and the compensation parameter corresponding to the angle error value for processes of adjusting the third pose information according to the coordinate compensation value and the angle compensation value.

In an illustrative example, a technical solution is further specifically provided as follows: relocating of the target object in the virtual space is triggered in a case that a preset condition is satisfied; where the preset condition includes at least one of the following: image data of an image in the real space shot by the camera are changed; a position of the mobile terminal in the virtual space is changed; a relocating request is received in the mobile terminal, where the relocating request is configured to request relocating of the target object in the virtual space; duration after the last locating of the target object in the virtual space reaches or exceeds first preset duration; and duration after the last locating of the target object in the point cloud space reaches or exceeds second preset duration. Through the technical solution in the embodiment, by providing a trigger condition for relocating, application scenarios of relocating are enriched, and the application range of the technical solution of relocating is expanded.

It should be noted that the first preset duration may be 1 minute, 20 minutes, 1 hour, etc., which will not be limited in the disclosure. In an embodiment, in a case that the first preset duration is 1 minute, if duration after the last locating of the target object in the virtual space is 2 minutes, the mobile terminal is triggered to apply for relocating of the target object in the virtual space.

In another embodiment, since the expression of the second preset duration is similar to the expression of the first preset duration, reference may be made to the first preset duration for a description process of the second preset duration, which will not be repeated herein.

In an illustrative example, in order to better understand S502 that a first image is acquired, a technical solution is provided as follows: an acquisition method for the first image includes one of the following: in a case that a frame rate of a video stream shot by the camera on the mobile terminal in the real space is greater than or equal to a second preset value, an image is selected from the video stream as the first image; in a case that a number of invalid images in a video stream shot by the camera on the mobile terminal in the real space is less than or equal to a third preset value, an image is selected from the video stream as the first image; and in a case that the camera on the mobile terminal shoots a plurality of images in the real space, an image having an image noise number less than or equal to a fourth preset value is selected from the plurality of images as the first image. Through the technical solution in the embodiment, with a plurality of acquisition methods for image data provided, an image data amount is increased. An image quality of the image data is improved by selecting the image data acquired in different acquisition methods.

It should be noted that the second preset value may include 20 frames/second and 24 frames/second, which will not be limited in the disclosure. In an embodiment, in a case that the second preset value is 20 frames/second, if the frame rate of the video stream shot by the camera on the mobile terminal in the real space is 10 frames/second, an image is selected from the video stream as the first image.

It should be noted that the third preset value may be within a range [0,100], which will not be limited in the disclosure. In an embodiment, in a case that the third preset value is 100, if the number of the invalid images in the video stream shot by the camera on the mobile terminal in the real space is 10, an image is selected from the video stream as the first image. The invalid image may be interpreted as an image having pixel information missing.

It should be noted that the fourth preset value may be set according to a sensor size in the camera.

In an illustrative example, a technical solution is further specifically provided as follows: a spatial point position of each pixel in image data of the first image is calculated, and the point cloud space is constructed according to the spatial point position, where the spatial point position of each pixel is acquired according to the second camera pose matrix; and the point cloud space is displayed in a visual form in the mobile terminal; where in the point cloud space, a position of the mobile terminal is taken as an origin, a forward direction of the mobile terminal is taken as a Z-axis direction, and an up direction of the mobile terminal is taken as a Y-axis direction. Through the technical solution in the embodiment, the point cloud space is constructed through the image data of the first image and displayed in a visual manner, so that the interactive experience of a use object is improved.

The method for relocating a target object will be further described below in conjunction with an embodiment as follows.

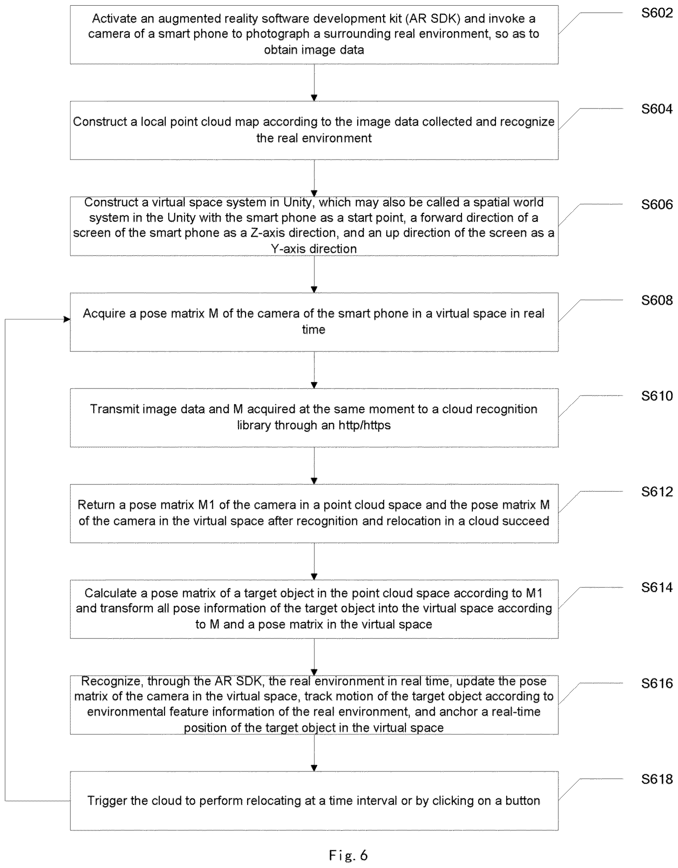

Fig. 6 is a flowchart of a method for relocating a target object according to another example of the disclosure. As shown in Fig. 6, with an AR software development kit (SDK) as an AR application development platform, a smart phone (equivalent to the mobile terminal) supporting an AR kit or an AR core is selected. The method is specifically implemented as follows:

At S602, the AR SDK is activated and a camera of the smart phone is invoked to photograph a surrounding real environment, so as to obtain image data (equivalent to the image data of the first image).

At S604, a local point cloud map (equivalent to the point cloud space) is constructed according to the image data collected, where a corresponding real environment may be reflected in the point cloud space.

It should be noted that, in an embodiment, a monocular camera (equivalent to the camera) may be configured to continuously collect images in the real environment rich in environmental texture. A process of constructing the point cloud map is completed according to the images collected. Pose information of the camera currently for collection and necessary feature information during image collection are recorded. A cloud recognition library in a cloud is constructed. Image data and a pose matrix (equivalent to the first camera pose matrix) of the camera in the virtual space are transmitted to the cloud recognition library in real time.

The necessary feature information during image collection includes, but is not limited to, a time for image collection, a frequency for image collection, information of a device for image collection, etc., which will not be limited in the disclosure.

At S606, a virtual space system (equivalent to the virtual space) is constructed in Unity, which may also be called a spatial world system in the Unity with the smart phone as a start point, a forward direction of a screen of the smart phone as a Z-axis direction, and an up direction of the screen as a Y-axis direction.

At S608, a pose matrix M of the camera of the smart phone in the virtual space is acquired in real time.

At S610, image data and M acquired at the same moment are transmitted to the cloud recognition library through a hypertext transfer protocol (http)/a hypertext transfer protocol secure (https).

It should be noted that the cloud recognition library may include a dynamic link library (dll) or a shared object (so) library.

At S612, a pose matrix M1 (equivalent to the second camera pose matrix) of the camera in the point cloud space and the pose matrix M of the camera in the virtual space are returned after the target object in the real environment is located in the cloud.

The pose matrix M1 of the camera in the point cloud space is a pose matrix of the camera acquired according to the image data in the cloud recognition library and the pose matrix of the camera in the virtual space. Specifically, after the cloud acquires the image data shot by the smart phone and the pose matrix of the camera of the smart phone in the virtual space, a pose matrix of the smart phone in the point cloud space is calculated in combination with the cloud recognition library constructed in the above step and transmitted back to the smart phone.

At S614, a pose matrix (equivalent to the first target pose matrix) of the target object in the point cloud space during relocating is calculated according to M1, and all pose information of the target object in the point cloud space is transformed into the virtual space according to M and a pose matrix, acquired during last locating, of the camera in the virtual space.

It should be noted that the process that all pose information of the target object in the point cloud space is transformed into the virtual space may be interpreted as follows: after receiving the pose matrix M of the camera of the smart phone in the virtual space and the pose matrix of the target object in the point cloud space that are returned from the cloud, the smart phone calculates a pose matrix (equivalent to the second target pose matrix) of the target object in the virtual space according to the two pose matrices.

At S616: the real environment is recognized in real time through the AR SDK, the image data collected are updated in real time to update the pose matrix of the camera in the virtual space, motion of the target object is tracked according to environmental feature information of the real environment, and a real-time position of the target object in the virtual space is anchored.

The environmental feature information of the real environment may affect image feature information of the image data collected and a spatial environment displayed in the point cloud space. The environmental feature information of the real environment may include a brightness feature of the environment, a weather state of the environment, etc. Correspondingly, the image feature information of the image data collected may include an image definition, image brightness, etc., which will not be limited in the disclosure.

For example, in an embodiment, in a case that the weather state of the real environment is foggy, the image definition in the image feature information may decrease, resulting in a decrease in completeness and definition of the point cloud space constructed.

In an embodiment, a process that real-time position of the target object in the virtual space is anchored may be interpreted as follows: an error value between the coordinates of the target object in the virtual space during relocating and the coordinates of the target object in the virtual space during the last locating, and an error value between the rotation angle of the target object in the virtual space during relocating and the rotation angle of the target object in the virtual space during the last locating are determined according to the pose matrix calculated of the target object in the virtual space. The error value denotes an anchoring error caused by the motion of the target object in the real environment. The error value may be solved by updating the coordinates and the rotation angle of the target object in the virtual space to coordinates and a rotation angle of the target object in the virtual space during each relocating in real time. Therefore, the target object is relocated in the virtual space.

At S618, the cloud is triggered to perform relocating at a time interval or by clicking on a button, and S608 is executed.

In an embodiment, a motion tracking process of the target object in the real environment and a recognition and location process of the target object in the point cloud space will lead to a certain offset value. Therefore, the pose information of the target object in the point cloud space may be acquired as much as possible in a relocation process by setting a function of automatically triggering relocation at regular times in the point cloud space. Accordingly, a proportion of the offset value is reduced, and accuracy of the offset value on a result of relocating the target object in the virtual space is improved. Further, the problem that the position shifts obviously when the target object is located in the virtual space is solved, and the AR experience of a user is improved.

After the pose information of the target object in the point cloud space is acquired as much as possible, pose data of the target object in the point cloud space may be averaged within an appropriate range. In other words, corresponding Euler angles and translation vectors in the pose matrix of the target object are averaged; alternatively, error data generated are filtered out; and alternatively, an uplink frame rate of the image generated when the image data are transmitted to the cloud is adjusted. Therefore, accuracy of the pose information of the target object in the point cloud space is improved.

In the above example, the motion tracking process and a spatial relocation process of the target object are completed through the AR SDK in combination with location and registration of the smart phone through the cloud recognition library in the cloud, so as to obtain the pose information of the target object in the point cloud space and transform the target object from the point cloud space to the virtual space. Accordingly, the consistency of observing the same target object by the user through the smart phone from different perspectives in the point cloud space is improved.

Also, in the above example, the pose information of the target object in the point cloud space is updated in real time through the cloud recognition library. Therefore, the error generated during spatial motion tracking is avoided.

Through the description of embodiments, those skilled in the art can clearly understand that the method according to the above example may be implemented in combination of software and a necessary general-purpose hardware platform and may also be certainly implemented through hardware. However, the former is a preferred embodiment in many cases. Based on such understanding, the technical solutions in essence of the disclosure or the part that contributes to the prior art can be embodied in the form of software products. The computer software product is stored in a storage medium (such as a read-only memory (ROM)/a random access memory (RAM), a magnetic disk, or an optical disk), and includes several instructions to make a terminal device (such as a mobile phone, a computer, a server, or a network device) execute the method in each example of the disclosure.

An apparatus for relocating a target object is further provided in the embodiment. The apparatus is configured to implement the above example and the preferred embodiment, the repetitions of which will not be described in detail herein. As used below, the term "module" can be a combination of software and/or hardware that implements preset functions. While the device described in the embodiment below is preferably implemented through software, it is possible to conceive that the device can also be implemented through hardware or a combination of the software and the hardware.

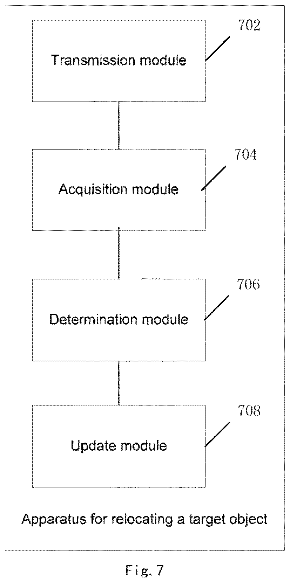

Fig. 7 is a schematic structural block diagram of an apparatus for relocating a target object according to an embodiment of the disclosure. As shown in Fig. 7, the apparatus for relocating a target object includes:

a transmission module 702 configured to acquire a first camera pose matrix and a first image during relocating of the target object in a virtual space, where the first camera pose matrix is configured to denote pose information of a camera on a mobile terminal in the virtual space during last locating of the target object in the virtual space, the first image is an image shot by the camera in a real space after the last locating, and the target object is positioned in the real space;

it should be noted that the mobile terminal may be interpreted as a mobile terminal device, including, but not limited to, a mobile phone, a tablet computer, a wearable device, a smart watch, etc; the mobile terminal may be set to work passively or actively; when working passively, the mobile terminal may be used by a person or a robot; the mobile terminal is provided with the camera for shooting;

it should be noted that the pose information of the camera may be interpreted as a collective name of a position and a pose of the camera, describing a transformation relation between a first coordinate system of a first space and a second coordinate system of a second space; and the pose matrix of the camera and first coordinates of the camera may be transformed mutually through a transformation matrix in a case that the first coordinates of the camera in the first coordinate system are known;

an acquisition module 704 configured to calculate a second camera pose matrix according to the first camera pose matrix and the first image, where the second camera pose matrix is configured to denote pose information corresponding to the camera in a point cloud space when the camera shoots the first image;

a determination module 706 configured to determine a first target pose matrix according to the second camera pose matrix, where the first target pose matrix is configured to denote first pose information of the target object in the point cloud space; and

an update module 708 configured to update second pose information of the target object in the virtual space according to the first target pose matrix, where the second pose information is pose information, acquired during the last locating, of the target object in the virtual space.

Through the apparatus, the first camera pose matrix and the first image are acquired during relocating of the target object in the virtual space, where the first camera pose matrix is configured to denote the pose information of the camera on the mobile terminal in the virtual space during the last locating of the target object in the virtual space, the first image is the image shot by the camera in the real space after the last locating, and the target object is positioned in the real space. The second camera pose matrix is calculated according to the first camera pose matrix and the first image, where the second camera pose matrix is configured to denote the pose information corresponding to the camera in the point cloud space when the camera shoots the first image. The first target pose matrix is determined according to the second camera pose matrix, where the first target pose matrix is configured to denote the first pose information of the target object in the point cloud space. The second pose information of the target object in the virtual space is updated according to the first target pose matrix, where the second pose information is the pose information, acquired during the last locating, of the target object in the virtual space. Therefore, the technical problem of low locating accuracy of the target object in the virtual space in the related art is solved, and the locating accuracy of the target object in the virtual space is improved.

It should be noted that a relocation process is essentially to unify a relative relation between the camera and contents in two three-dimensional spaces. Therefore, in the embodiment, firstly, two three-dimensional spaces, i.e., the point cloud space and the virtual space are constructed. The point cloud space may be interpreted as a three-dimensional space constructed through a point cloud technology. Pose information of the camera and the contents may be accurately acquired in the point cloud space in combination with a recognition algorithm. The virtual space may be interpreted as a three-dimensional space constructed based on spatial coordinate axes. Since the position of the target object in the virtual space is likely to shift, it is generally require to relocate the target object in the virtual space.

It should be noted that reference may be made to a description process of the pose information of the camera for the description of the pose information of the target object, which will not be repeated herein.

In an embodiment, if being set to $P_w$, a first coordinate $P_w$ of point P may be transformed to a second coordinate of point P in the coordinate system of the second space through the camera pose matrix. The second coordinate $P_c$ is expressed as follows:

$$P_c = T_{cw} \times P_w \qquad (1);$$

and alternatively,
point P is transformed from the second coordinate system to the first coordinate system:

$$P_w = T_{wc} \times P_c = T_{cw}^{-1} \times P_c \qquad (2).$$

$T_{cw}$ denotes a transformation matrix for transforming point P from the first coordinate system to the second coordinate system, and $T_{wc}$ denotes a transformation matrix for transforming point P from the second coordinate system to the first coordinate system.

Based on the above example, the target object may be transformed between the point cloud space and the virtual space in a case that the first space denotes the point cloud space, and the second space denotes the virtual space.

The update module is further configured to update the second pose information of the target object in the virtual space to third pose information according to the first target pose matrix as follows: a second target pose matrix is determined according to the first camera pose matrix and the first target pose matrix, where the second target pose matrix is configured to denote the third pose information of the target object in the virtual space after the last locating; and the second pose information is updated to the third pose information in a case that an error value between the second pose information and the third pose information is greater than a first preset value. Through the technical solution in the embodiment, the pose information of the target object in the virtual space may be updated in a case that the pose information of the target object in the virtual space is changed, so that the position of the target object is updated. Accordingly, the locating accuracy of the target object is further improved.

It should be noted that the error value may be an angle error value or a position error value in terms of type, which will not be limited in the disclosure.

It should be noted that the first preset value may be set corresponding to the type of the error value manually or determined by historical data.

In an embodiment, the first preset value relative to the angle error value may be a degree within a range [0,1], the first preset value relative to the position error value may be denoted by coordinate values, and the range of the first preset value, i.e., an offset range of the coordinates, is [-1,1].

The apparatus for relocating a target object further includes an error compensation module configured to compensate the third pose information with the error value; and alternatively, acquire a compensation parameter corresponding to the error value and compensate the third pose information with a quotient value obtained by dividing the error value by the compensation parameter. Through the technical solution in the embodiment, an error of the pose information updated of the target object in the virtual space can be reduced, and the confidence of the pose information of the target object in the virtual space can be improved.

It should be noted that the compensation parameter may be interpreted as a compensation number for the error value and preset according to the error value, and has a positive correlation relation with the error value. For example, the larger the error value is, the larger the compensation parameter corresponding to the error value is.

The apparatus for relocating a target object further includes a coordinate compensation module configured to determine a coordinate compensation value corresponding to the error value; and adjust spatial coordinates in the third pose information according to the coordinate compensation value. Through the technical solution in the embodiment, an error of the spatial coordinates updated of the target object in the virtual space can be reduced, the confidence of the pose information of the target object in the virtual space can be improved, and the locating accuracy of the target object in the virtual space can be improved.

The apparatus for relocating a target object further includes an angle compensation module configured to determine an angle compensation value corresponding to the error value, where the angle compensation value is configured to denote an angle difference between a spatial angle of the camera during the last locating and a spatial angle after the last locating; and adjust a spatial angle in the third pose information according to the angle compensation value. Through the technical solution in the embodiment, an error of the spatial angle updated of the target object in the virtual space can be reduced, the confidence of the pose information of the target object in the virtual space can be improved, and the locating accuracy of the target object in the virtual space can be improved.

In an embodiment, in a case that the error value is a type of angle error value, if the angle error value is set to 0.5 degree, a corresponding compensation number is set to 5, and if the angle error value is set to 1 degree, the corresponding compensation number is set to 10.

In an embodiment, a process of compensating the third pose information with the quotient value obtained by dividing the error value by the compensation parameter may be interpreted as a process of compensation with the angle error value and the compensation parameter corresponding to the angle error value: in a case that the angle error value is set to 0.5 degree and a compensation number corresponding to the angle error value is set to 5, the third pose information may be compensated with a quotient value obtained by dividing 0.5 degree by 5, i.e., 0.1 degree. In some cases, the third pose information may be compensated 5 times, with a compensation value of 0.1 degree each time.

It should be noted that the coordinate compensation value and the angle compensation value have a positive correlation relation with the error value separately. Therefore, processes of adjusting the third pose information according to the coordinate compensation value and the angle compensation value is similar to the process of compensation with the angle error value and the compensation parameter corresponding to the angle error value. In another embodiment, reference may be made to the process of compensation with the angle error value and the compensation parameter corresponding to the angle error value for processes of adjusting the third pose information according to the coordinate compensation value and the angle compensation value.

The apparatus for relocating a target object further includes a trigger module configured to trigger relocating of the target object in the virtual space in a case that a preset condition is satisfied; where the preset condition includes at least one of the following: image data of an image shot by the camera in the real space are changed; a position of the mobile terminal in the virtual space is changed; a relocating request is received in the mobile terminal, where the relocating request is configured to request relocating of the target object in the virtual space; duration after the last locating of the target object in the virtual space reaches or exceeds first preset duration; and duration after the last locating of the target object in the point cloud space reaches or exceeds second preset duration. Through the technical solution in the embodiment, by providing a trigger condition for relocating, application scenarios of relocating are enriched, and the application range of the technical solution of relocating is expanded.

It should be noted that the first preset duration may be 1 minute, 20 minutes, 1 hour, etc., which will not be limited in the disclosure. In an embodiment, in a case that the first preset duration is 1 minute, if duration after the last locating of the target object in the virtual space is 2 minutes, the mobile terminal is triggered to apply for relocating of the target object in the virtual space.

In another embodiment, since the expression of the second preset duration is similar to the expression of the first preset duration, reference may be made to the first preset duration for a description process of the second preset duration, which will not be repeated herein.

An acquisition method for the first image includes one of the following: in a case that a frame rate of a video stream shot by the camera on the mobile terminal in the real space is greater than or equal to a second preset value, an image is selected from the video stream as the first image; in a case that a number of invalid images in a video stream shot by the camera on the mobile terminal in the real space is less than or equal to a third preset value, an image is selected from the video stream as the first image; and in a case that the camera on the mobile terminal shoots a plurality of images in the real space, an image having an image noise number less than or equal to a fourth preset value is selected from the plurality of images as the first image. Through the technical solution in the embodiment, with a plurality of acquisition methods for image data provided, an image data amount is increased. An image quality of the image data is improved by selecting the image data acquired in different acquisition methods.

It should be noted that the second preset value may include 20 frames/second and 24 frames/second, which will not be limited in the disclosure. In an embodiment, in a case that the second preset value is 20 frames/second, if the frame rate of the video stream shot by the camera on the mobile terminal in the real space is 10 frames/second, an image is selected from the video stream as the first image.

It should be noted that the third preset value may be within a range [0,100], which will not be limited in the disclosure. In an embodiment, in a case that the third preset value is 100, if the number of the invalid images in the video stream shot by the camera on the mobile terminal in the real space is 10, an image is selected from the video stream as the first image. The invalid image may be interpreted as an image having pixel information missing.

It should be noted that the fourth preset value may be set according to a sensor size in the camera.

The apparatus for relocating a target object further includes a construction module configured to calculate a spatial point position of each pixel in image data of the first image, and construct the point cloud space according to the spatial point position, where the spatial point position of each pixel is acquired according to the second camera pose matrix; and display the point cloud space in a visual form in the mobile terminal; where in the point cloud space, a position of the mobile terminal is taken as an origin, a forward direction of the mobile terminal is taken as a Z-axis direction, and an up direction of the mobile terminal is taken as a Y-axis direction. Through the technical solution in the embodiment, the point cloud space is constructed through the image data of the first image and displayed in a visual manner, so that the interactive experience of a use object is improved.

In an illustrative example, the computer-readable storage medium may include, but is not limited to, various media storing a computer program, such as a universal serial bus (USB) flash disk, a read-only memory (ROM), a random access memory (RAM), a mobile hard disk, a magnetic disk, and an optical disk.

Reference may be made to the instances described in the above examples and the illustrative embodiments for the specific instances in the embodiment, which will not be repeated in the embodiment.

An electronic apparatus is further provided in an embodiment of the disclosure. The electronic apparatus includes a memory and a processor, where the memory stores a computer program, and the processor is configured to execute steps of any method example described above when running the computer program.

Optionally, in the embodiment, through the computer program, the processor may be configured to:

At S1, acquire a first camera pose matrix and a first image during relocating of a target object in a virtual space, where the first camera pose matrix is configured to denote pose information of a camera on a mobile terminal in the virtual space during last locating of the target object in the virtual space, the first image is an image shot by the camera in a real space after the last locating, and the target object is positioned in the real space;

At S2, calculate a second camera pose matrix according to the first camera pose matrix and the first image, where the second camera pose matrix is configured to denote pose information corresponding to the camera in a point cloud space when the camera shoots the first image;

At S3, determine a first target pose matrix according to the second camera pose matrix, where the first target pose matrix is configured to denote first pose information of the target object in the point cloud space; and

At S4, update second pose information of the target object in the virtual space according to the first target pose matrix, where the second pose information is pose information, acquired during the last locating, of the target object in the virtual space.

In an illustrative example, the electronic apparatus may further include a transmission device and an input/output device, where the transmission device and the input/output device are connected to the processor.

Reference may be made to the instances described in the above examples and the illustrative embodiments for the specific instances in the embodiment, which will not be repeated in the embodiment.

Apparently, those skilled in the art should understand that all the modules or steps above of the disclosure can be implemented through a general-purpose calculation apparatus, centralized on a single calculation apparatus or distributed over a network composed of a plurality of calculation apparatuses, and implemented through program codes executable by the calculation apparatus. Therefore, the modules or steps can be stored in a storage apparatus to be executed by the calculation apparatus.

In an embodiment, through the computer program, the program codes may be configured to:

At S1, acquire a first camera pose matrix and a first image during relocating of a target object in a virtual space, where the first camera pose matrix is configured to denote pose information of a camera on a mobile terminal in the virtual space during last locating of the target object in the virtual space, the first image is an image shot by the camera in a real space after the last locating, and the target object is positioned in the real space;

At S2, calculate a second camera pose matrix according to the first camera pose matrix and the first image, where the second camera pose matrix is configured to denote pose information corresponding to the camera in a point cloud space when the camera shoots the first image;

At S3, determine a first target pose matrix according to the second camera pose matrix, where the first target pose matrix is configured to denote first pose information of the target object in the point cloud space; and

At S4, update second pose information of the target object in the virtual space according to the first target pose matrix, where the second pose information is pose information, acquired during the last locating, of the target object in the virtual space.

In some cases, the steps shown or described can be executed in a different order from that is shown herein or fabricated into individual integrated circuit modules. Alternatively, a plurality of modules or the steps can be implemented by fabricating them into individual integrated circuit modules. In this way, the disclosure is not limited to any particular combination of hardware and software.

What are described above are merely preferred examples of the disclosure and are not intended to limit the disclosure. Those skilled in the art can make various modifications and variations to the disclosure. Any modifications, equivalent replacements, improvements, etc. made within the principles of the disclosure should fall within the scope of protection of the disclosure.

**Claims**

1.  A method for relocating a target object, comprising:

    acquiring a first camera pose matrix and a first image during relocating of the target object in a virtual space, wherein the first camera pose matrix is configured to denote pose information of a camera on a mobile terminal in the virtual space during last locating of the target object in the virtual space, the first image is an image shot by the camera in a real space after the last locating, and the target object is positioned in the real space;

    calculating a second camera pose matrix according to the first camera pose matrix and the first image, wherein the second camera pose matrix is configured to denote pose information corresponding to the camera in a point cloud space when the camera shoots the first image;

    determining a first target pose matrix according to the second camera pose matrix, wherein the first target pose matrix is configured to denote first pose information of the target object in the point cloud space; and

    updating second pose information of the target object in the virtual space according to the first target pose matrix, wherein the second pose information is pose information, acquired during the last locating, of the target object in the virtual space.

2.  The method for relocating a target object according to claim 1, wherein the updating second pose information of the target object in the virtual space according to the first target pose matrix comprises:
    updating the second pose information of the target object in the virtual space to third pose information according to the first target pose matrix as follows:

    determining a second target pose matrix according to the first camera pose matrix and the first target pose matrix, wherein the second target pose matrix is configured to denote the third pose information of the target object in the virtual space after the last locating; and

    updating the second pose information to the third pose information in a case that an error value between the second pose information and the third pose information is greater than a first preset value.

3.  The method for relocating a target object according to claim 2, further comprising:

    compensating the third pose information with the error value; or

    acquiring a compensation parameter corresponding to the error value, and compensating the third pose information with a quotient value obtained by dividing the error value by the compensation parameter.

4.  The method for relocating a target object according to claim 3, wherein the compensating the third pose information with the error value comprises:

    determining a coordinate compensation value corresponding to the error value; and

    adjusting spatial coordinates in the third pose information according to the coordinate compensation value.

5.  The method for relocating a target object according to claim 3, wherein the compensating the third pose information with the error value comprises:

    determining an angle compensation value corresponding to the error value, wherein the angle compensation value is configured to denote an angle difference between a spatial angle of the camera during the last locating and a spatial angle after the last locating; and

    adjusting a spatial angle in the third pose information according to the angle compensation value.

6.  The method for relocating a target object according to claim 1, further comprising:

    triggering relocating of the target object in the virtual space in a case that a preset condition is satisfied; wherein the preset condition comprises at least one of the following:

image data of an image shot by the camera in the real space are changed;

a position of the mobile terminal in the virtual space is changed;

a relocating request is received in the mobile terminal, wherein the relocating request is configured to request relocating of the target object in the virtual space;

duration after the last locating of the target object in the virtual space reaches or exceeds first preset duration; and

duration after the last locating of the target object in the point cloud space reaches or exceeds second preset duration.

7. The method for relocating a target object according to claim 1, wherein an acquisition method for the first image comprises one of the following:

selecting, in a case that a frame rate of a video stream shot by the camera on the mobile terminal in the real space is greater than or equal to a second preset value, an image from the video stream as the first image;

selecting, in a case that a number of invalid images in a video stream shot by the camera on the mobile terminal in the real space is less than or equal to a third preset value, an image from the video stream as the first image; and

selecting, in a case that the camera on the mobile terminal shoots a plurality of images in the real space, an image having an image noise number less than or equal to a fourth preset value from the plurality of images as the first image.

8. The method for relocating a target object according to claim 1, further comprising:

calculating a spatial point position of each pixel in image data of the first image, and constructing the point cloud space according to the spatial point position, wherein the spatial point position of each pixel is acquired according to the second camera pose matrix; and

displaying the point cloud space in a visual form in the mobile terminal; wherein

in the point cloud space, a position of the mobile terminal is taken as an origin, a forward direction of the mobile terminal is taken as a Z-axis direction, and an up direction of the mobile terminal is taken as a Y-axis direction.

9. An apparatus for relocating a target object, comprising:

a transmission module, configured to acquire a first camera pose matrix and a first image during relocating of the target object in a virtual space, wherein the first camera pose matrix is configured to denote pose information of a camera on a mobile terminal in the virtual space during last locating of the target object in the virtual space, the first image is an image shot by the camera in a real space after the last locating, and the target object is positioned in the real space;

an acquisition module, configured to calculate a second camera pose matrix according to the first camera pose matrix and the first image, wherein the second camera pose matrix is configured to denote pose information corresponding to the camera in a point cloud space when the camera shoots the first image;

a determination module, configured to determine a first target pose matrix according to the second camera pose matrix, wherein the first target pose matrix is configured to denote first pose information of the target object in the point cloud space; and

an update module, configured to update second pose information of the target object in the virtual space according to the first target pose matrix, wherein the second pose information is pose information, acquired during the last locating, of the target object in the virtual space.

10. A computer-readable storage medium, storing a computer program, wherein the computer program is configured to, when executed by a processor, cause the processor to implement the method as claimed in any one of claims 1-8.

11. An electronic apparatus, comprising a memory and a processor, wherein the memory stores a computer program, and the processor is configured to execute the computer program to implement the method as claimed in any one of claims 1-8.

Transmission
device 106

Input/output
device 108

Processor 102

Memory 104

Fig. 1

| Mobile end | | Cloud recognition library |
|---|---|---|

1. Upload a real-time picture currently shot by a camera and a last pose matrix of the camera in a current virtual space in a case that a mobile end applies for relocating

2. Perform recognition in a cloud and calculate a pose matrix of the camera in a point cloud space

3. Return the pose matrix of the camera in the point cloud space and the pose matrix of the camera in the virtual space to the mobile end after recognition and calculation in the cloud are ended

4. Calculate pose information of a target object in the virtual space based on two pose matrices returned at the mobile end and update a position and a rotation angle of the target object in the virtual space, so as to complete relocating

Fig. 2

Positions of a camera and a target object in a point cloud space

Camera
(2, 2)
●

Target object
(0, 0)

Fig. 3

Positions of a camera and a
target object in a virtual space

Relocate and
update a position of
the target object in
the virtual space

Positions of a camera and a
target object in a virtual space

Camera
（3， 1）

Camera
（3， 1）

Target object
（0， 0）

Target object
（1， -1）

Fig. 4

Acquire a first camera pose matrix and a first image during relocating of a target object
in a virtual space, where the first camera pose matrix is configured to denote pose
information of a camera on a mobile terminal in the virtual space during last locating of
the target object in the virtual space, the first image is an image shot by the camera in
a real space after the last locating, and the target object is positioned in the real space

S502

Calculate a second camera pose matrix according to the first camera pose matrix and
the first image, where the second camera pose matrix is configured to denote pose
information corresponding to the camera in a point cloud space when the camera
shoots the first image

S504

Determine a first target pose matrix according to the second camera pose matrix,
where the first target pose matrix is configured to denote first pose information of the
target object in the point cloud space

S506

Update second pose information of the target object in the virtual space according to
the first target pose matrix, where the second pose information is pose information,
acquired during the last locating, of the target object in the virtual space

S508

Fig. 5

Activate an augmented reality software development kit (AR SDK) and invoke a camera of a smart phone to photograph a surrounding real environment, so as to obtain image data — S602

Construct a local point cloud map according to the image data collected and recognize the real environment — S604

Construct a virtual space system in Unity, which may also be called a spatial world system in the Unity with the smart phone as a start point, a forward direction of a screen of the smart phone as a Z-axis direction, and an up direction of the screen as a Y-axis direction — S606

Acquire a pose matrix M of the camera of the smart phone in a virtual space in real time — S608

Transmit image data and M acquired at the same moment to a cloud recognition library through an http/https — S610

Return a pose matrix M1 of the camera in a point cloud space and the pose matrix M of the camera in the virtual space after recognition and relocation in a cloud succeed — S612

Calculate a pose matrix of a target object in the point cloud space according to M1 and transform all pose information of the target object into the virtual space according to M and a pose matrix in the virtual space — S614

Recognize, through the AR SDK, the real environment in real time, update the pose matrix of the camera in the virtual space, track motion of the target object according to environmental feature information of the real environment, and anchor a real-time position of the target object in the virtual space — S616

Trigger the cloud to perform relocating at a time interval or by clicking on a button — S618

F i g. 6

702

Transmission module

704

Acquisition module

706

Determination module

708

Update module

Apparatus for relocating a target object

Fig. 7

## INTERNATIONAL SEARCH REPORT

| International application No. |
|---|
| **PCT/CN2022/132629** |

**A.    CLASSIFICATION OF SUBJECT MATTER**

G06T 7/00(2017.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT, CNKI, WPI, EPODOC: 目标物体, 重定位, 虚拟空间, 相机, 位姿矩阵, 图像, 现实空间, 点云空间, 误差, 补偿参数; target object, relocation, virtual space, camera, pose matrix, image, real space, point cloud space, error, compensation parameters

**C.    DOCUMENTS CONSIDERED TO BE RELEVANT**

| Category* | Citation of document, with indication, where appropriate, of the relevant passages | Relevant to claim No. |
|---|---|---|
| A | US 2021142579 A1 (NAVER LABS CORPORATION) 13 May 2021 (2021-05-13)<br>claims 1-14 | 1-11 |
| A | US 2016371829 A1 (FUJITSU LIMITED) 22 December 2016 (2016-12-22)<br>entire document | 1-11 |
| A | CN 108694348 A (SUN YAT-SEN UNIVERSITY) 23 October 2018 (2018-10-23)<br>entire document | 1-11 |
| A | 杨元慧等 (YANG, Yuanhui et al.). "单目视觉SLAM车载摄像机快速位姿估计及景物重构 (Fast pose estimation for on-board camera and scene reconstruction in monocular vision SLAM)"<br>山东大学学报(理学版) (Journal of Shandong University(Natural Science)),<br>Vol. 51, No. 12, 31 December 2016 (2016-12-31),<br>ISSN: ,<br>entire document | 1-11 |
| A | CN 109685913 A (XIDIAN UNIVERSITY) 26 April 2019 (2019-04-26)<br>entire document | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"    later document published after the international filing date or priority date and not in conflict with the application but cited to understand the principle or theory underlying the invention

"X"    document of particular relevance; the claimed invention cannot be considered novel or cannot be considered to involve an inventive step when the document is taken alone

"Y"    document of particular relevance; the claimed invention cannot be considered to involve an inventive step when the document is combined with one or more other such documents, such combination being obvious to a person skilled in the art

"&"    document member of the same patent family

| Date of the actual completion of the international search | Date of mailing of the international search report |
|---|---|
| **05 January 2023** | **16 January 2023** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/132629**

| Patent document cited in search report | | | Publication date (day/month/year) | Patent family member(s) | | | Publication date (day/month/year) |
|---|---|---|---|---|---|---|---|
| US | 2021142579 | A1 | 13 May 2021 | KR | 102198851 | B1 | 05 January 2021 |
| US | 2016371829 | A1 | 22 December 2016 | JP | 2017011328 | A | 12 January 2017 |
| | | | | EP | 3113110 | A1 | 04 January 2017 |
| CN | 108694348 | A | 23 October 2018 | | None | | |
| CN | 109685913 | A | 26 April 2019 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111387413